# EUROPÄISCHE PATENTSCHRIFT

(11) **EP 3 730 908 B1**
(45) Veröffentlichungstag und Bekanntmachung des Hinweises auf die Patenterteilung: **07.06.2023**
(21) Anmeldenummer: 19171391.6
(22) Anmeldetag: 26.04.2019
(51) Int. Cl.: G01S 13/88, G01F 22/00, G01F 25/00, G01F 23/284, G01F 17/00, G01S 7/41, G01S 13/42

(54) **VERFAHREN ZUR ERMITTLUNG EINER LINEARISIERUNGSKURVE ZUR ERMITTLUNG DES FÜLLSTANDS IN EINEM BEHÄLTER UND VERWENDUNG EINES FÜLLSTANDMESSGERÄTS FÜR DIESES VERFAHREN**
METHOD FOR DETERMINING A LINEARISATION CURVE FOR DETERMINING THE FILL LEVEL IN A CONTAINER AND USE OF A FILL LEVEL MEASURING DEVICE FOR THIS METHOD
PROCÉDÉ DE DÉTERMINATION D'UNE COURBE DE LINÉARISATION PERMETTANT DE DÉTERMINER LE NIVEAU DE REMPLISSAGE DANS UN RÉCIPIENT ET UTILISATION D'UN APPAREIL DE MESURE DE NIVEAU DE REMPLISSAGE POUR LEDIT PROCÉDÉ

(43) Veröffentlichungstag der Anmeldung: 28.10.2020
(73) Patentinhaber: VEGA Grieshaber KG, 77709 Wolfach (DE)
(72) Erfinder: Allgaier, Stefan, 77709 Oberwolfach (DE)
(74) Vertreter: Patentanwälte Bauer Vorberg Kayser

(56) Entgegenhaltungen:
- EP-A1- 1 412 710
- WO-A1-2015/185116
- DE-A1- 10 106 176
- DE-A1-102004 041 857
- DE-A1-102016 111 570
- FR-A1- 2 777 084
- US-A1- 2010 212 397

## Beschreibung

Die vorliegende Erfindung betrifft ein Verfahren zur Ermittlung einer Linearisierungskurve zur Ermittlung des Füllstands in einem Behälter aus einer Füllhöhe gemäß dem Oberbegriff des Patentanspruchs 1 sowie die Verwendung eines Füllstandmessgeräts für dieses Verfahren gemäß Patentanspruch 3.

Die vorliegende Erfindung betrifft das Gebiet der Prozessmesstechnik und hier insbesondere der Füllstandmesstechnik. In der Füllstandmesstechnik ist es üblich, zur Ermittlung eines Füllstands in einem Behälter ausgehend von einer Füllhöhe eine Berechnung des Füllstands vorzunehmen. Die Füllhöhe kann dabei auf verschiedene Art und Weise ermittelt werden. Bekannte Verfahren zur Ermittlung der Füllhöhe in einem Behälter sind einerseits ausgehend von einem Behälterboden die hydrostatische Ermittlung eines durch das Füllmedium verursachten Drucks, ausgehend von einer Decke des Behälters die Ermittlung eines zwischen einer Sensorposition und einer Oberfläche des Füllgutes befindlichen Abstands mittels Radar, geführtem Radar, Ultraschall, auf kapazitive Weise oder mittels anderer geeigneter Verfahren, oder die Ermittlung von diskreten Grenzständen innerhalb des Behälters ausgehend von beispielsweise einer Seitenwandung des Behälters.

Sämtlichen vorgenannten Verfahren ist es gemein, dass durch die angegebenen Messmethoden kein Füllstand des Behälters, sondern lediglich eine Füllhöhe innerhalb des Behälters ermittelbar ist. Der Zusammenhang zwischen einer Füllhöhe und dem Füllstand wird durch eine sogenannte Linearisierungskurve beschrieben, die, abhängig von einer Behältergeometrie sowie eventuell in dem Behälter befindlichen Einbauten eine Funktion für die Umrechnung der Füllhöhe in den Füllstand beschreibt. Entsprechende Linearisierungskurven können in der Zeit nur äußerst ungenau anhand von händischen Messungen und mit Hilfe von Linearisierungstabellen ermittelt werden. Bei den aus dem Stand der Technik bekannten Verfahren hierzu ist es beispielsweise nicht oder nur sehr bedingt möglich, Unregelmäßigkeiten innerhalb des Behälters und/oder die Auswirkungen von Einbauten in Behältern bei der Ermittlung des Füllstandes zu berücksichtigen.

Aufgrund ihrer Präzision und Robustheit gegenüber äußeren Einflüssen haben sich im Stand der Technik Radarfüllstandmessgeräte immer mehr durchgesetzt.

Weiterer Stand der Technik ist aus der US 2010/212397 A1, der FR 2 777 084 A1 sowie der DE 101 06 17 6 A1 bekannt.

Es ist die Aufgabe der vorliegenden Erfindung ein Verfahren zur Bestimmung einer Linearisierungskurve anzugeben, das nach Möglichkeit keine manuellen Eingaben oder zusätzliche Messgeräte benötigt.

Diese Aufgabe wird durch ein Verfahren mit den Merkmalen des Patentanspruchs 1, die Verwendung eines 3D-Radarmessgeräts gemäß Patentanspruch 3, ein Radarfüllstandmessgerät gemäß Patentanspruch 4 sowie einen Computerprogrammcode gemäß Patentanspruch 5 gelöst. Vorteilhafte Weiterbildungen sind Gegenstand abhängiger Patentansprüche.

Ein erfindungsgemäßes Verfahren zur Ermittlung einer Linearisierungskurve zur Ermittlung des Füllstandes in einem Behälter aus einer Füllhöhe mit einem Radarmessgerät zeichnet sich dadurch aus, dass dreidimensionaler Daten des Behälters mit dem Radarfüllstandmessgerät, durch systematisches Abtasten eines Innenraums des Behälters mittels des Radarmessgeräts erfasst, ein dreidimensionales Modell des Behälters ermittelt und die Linearisierungskurve zur Ermittlung eines Füllstandes aus einer gemessenen Füllhöhe aus dem dreidimensionalen Modell bestimmt wird. Als dreidimensionales Modell des Behälters soll vorliegend ein digitalisiertes Abbild eines Innenraumes des Behälters, insbesondere der Begrenzungswandungen und innerhalb dieser angeordneten Einbauten verstanden werden. Die äußere Erscheinung des Behälters und etwaige Anbauten, die keinen Einfluss auf das Innenvolumen des Behälters haben sollen davon insbesondere nicht umfasst sein.

Die Ermittlung des Füllstandes erfolgt dabei auf Basis einer Füllhöhe bzw. auf Basis eines Abstands einer Füllgutoberfläche von dem Radarmessgerät.

Es ist mit dem Verfahren der vorliegenden Anmeldung also möglich, eine Linearisierungskurve zur Füllstandbestimmung ohne zusätzlich Geräte oder aufwändige manuelle Eingaben allein mit dem Radarmessgerät zu ermitteln. Das Abtasten des Innenraums des Behälters kann automatisiert, bspw. bei einer Inbetriebnahme des Radarmessgeräts erfolgen und/oder zyklisch und/oder ereignisorientiert durchgeführt werden.

Auf diese Weise kann direkt bei der Inbetriebnahme des Radarmessgeräts ein tatsächlicher Innenraum des Füllstandmessgerätes ermittelt und für den Messbetrieb verwendet werden. Dies ist insbesondere vorteilhaft, da ein tatsächlicher Innenraum aufgrund von zusätzlichen Einbauten häufig von einer Planung abweichen kann. Eine Erfassung des Füllgutvolumens ist auch dann möglich, wenn die Abmessungen des Behälters nicht von vornherein bekannt sind, sondern erst bei der Inbetriebnahme ermittelt werden.

Erfindungsgemäß wird ein Radarfüllstandmessgerät zur Durchführung des Verfahrens verwendet.

Das Erfassen der dreidimensionalen Daten des Behälters erfolgt erfindungsgemäß durch ein Verändern der Hauptabstrahlrichtung des Radarmessgerätes relativ zu dem Behälter.

Eine solche Veränderung der Hauptabstrahlrichtung kann bspw. durch mechanische oder elektronische Mittel erfolgen. Bspw. kann das Radarmessgerät mechanisch verschwenkt oder die Hauptabstrahlrichtung durch entsprechende Reflektoren oder Strahlformungseinrichtungen, bspw. Linsen oder Prismen, verändert werden.

Erfindungsgemäß wird die Hauptabstrahlrichtung des Radarmessgeräts auch durch eine entsprechende Ansteuerung einer Antenne des Radarmessgeräts verändert. Eine Veränderung der Hauptabstrahlrichtung ist bspw. bei sogenannten Phased Array Antennen möglich. Bei diesen Antennen mit einer Mehrzahl von in einem Array angeordneten Patchelementen kann durch eine geschickte Ansteuerung der einzelnen Patchelemente ein Verschwenken der Hauptabstrahlrichtung erreicht werden. Auf diese Weise kann der Innenraum eines Behälters besonders einfach abgetastet werden.

Ferner wird erfindungsgemäß eine Lage des Behälters erfasst.

Bei beweglichen Behältern wird auf diese Weise eine Änderung einer Ausrichtung des Behälters erkannt und fließt direkt in die Berechnung des Füllstandes oder eines Füllgutvolumens ein. Da auf diese Weise die Behältergeometrie, die Einbauposition des Füllstandsensors sowie die Lage des Behälters bekannt sind können Änderungen des Verhältnisses zwischen Füllhöhe und Füllstand bzw. Füllgutvolumen direkt berücksichtigt werden. Auch Auswirkungen auf den Füllstand bzw. das Füllgutvolumen durch mehr oder weniger eingetauchte Einbauten auf Grund der geänderten Lage des Behälters werden entsprechend berücksichtigt. Eine Erfassung der Lage kann durch einen Lagesensor, der bspw. als Beschleunigungssensor ausgebildet sein kann, aber insbesondere bei Flüssigkeiten auch durch eine Erfassung einer Ausrichtung der Oberfläche der Flüssigkeit, erfolgen.

Erfindungsgemäß wird die dreidimensionale Erfassung des Behälters durch eine Datenbank mit dreidimensionalen Daten möglicher Einbauten unterstützt. Durch eine entsprechende Datenbank, in der bspw. Reflexions-Signaturen von bestimmten Einbauten abgelegt sein können, kann eine Erkennung der Einbauten ermöglicht und so eine Berücksichtigung der gesamten Einbauten anstelle nur der sichtbaren Bereiche realisiert werden.

Eine Form der Einbauten kann dabei durch ein Abtasten mit dem Radarmessgerät ermittelt werden.

Das vorliegende Verfahren wird bevorzugt zyklisch oder ereignisorientiert durchlaufen, wobei ein Vergleich mit einem Ergebnis aus einem vorhergehenden Durchlauf des Verfahrens erfolgen kann.

Ein zyklisches Durchlaufen des vorliegenden Verfahrens kann bspw. ein erstmaliges Durchlaufen des Verfahrens bei der Inbetriebnahme des Radarmessgeräts und anschließend ein erneutes Durchlaufen des Verfahrens in vorgegebenen oder vorgebbaren Zeitabständen bedeuten. Ein ereignisorientiertes Durchlaufen des Verfahrens kann bspw. bei der Inbetriebnahme des Radarmessgerätes und anschließend immer dann, wenn ein minimaler Füllstand erreicht wird, bedeuten. Natürlich ist auch eine Kombination aus einem zyklischen und einem ereignisorientierten Durchlaufen des Verfahrens möglich.

Erfindungsgemäß wird ein 3D-Radarfüllstandmessgerät, zur Durchführung eines Verfahrens gemäß der obigen Beschreibung verwendet.

Unter einem 3D-Radarmessgerät wird ein Radarmessgerät verstanden, das Messungen in unterschiedliche Richtungen durchführen kann. Bspw. kann dies durch eine Veränderung der Hauptabstrahlrichtung des Radarmessgeräts erfolgen, wodurch eine Abtastung des Innenraums des Behälters ermöglicht wird. Eine solche Veränderung der Hauptabstrahlrichtung kann, wie oben beschrieben, bspw. durch mechanische oder elektronische Mittel erfolgen.

Ein erfindungsgemäßes Radarfüllstandmessgerät zur Bestimmung eines Füllstandes in einem Behälter zeichnet sich dadurch aus, dass das Radarfüllstandmessgerät als 3D-Radarmessgerät ausgebildet ist und eingerichtet ist zur Ermittlung einer Linearisierungskurve, wobei das 3D-Radarmessgerät Mittel zur Erfassen dreidimensionaler Daten des Behälters, durch systematisches Abtasten eines Innenraums des Behälters aufweist, und in einer Recheneinheit Algorithmen zur Ermittlung eines dreidimensionalen Modells des Behälters abgelegt sind.

Mit dem vorliegenden Radarmessgerät lässt sich damit automatisiert die Linearisierungskurve zur Bestimmung eines Füllstandes oder Füllgutvolumens aus einer Füllhöhe bzw. aus einem Abstand einer Füllgutoberfläche von dem Radarmessgerät, ermitteln.

Zur Unterstützung der Berechnung der Linearisierungskurve ist in der Recheneinheit ferner ein Zugriff auf eine Datenbank mit dreidimensionalen Daten möglicher Einbauten hinterlegt. Die Datenbank kann in dem Radarmessgerät, der Recheneinheit oder damit verbundenen Geräten hinterlegt sein, oder auch online zur Verfügung stehen. Durch eine solche Datenbank können verschiedene Einbauten anhand ihrer Reflexionssignatur, also anhand der Art und Weise wie elektromagnetische Strahlung von ihnen reflektiert wird, klassifiziert und bei der Berechnung der Linearisierungskurve berücksichtigt werden.

Ein erfindungsgemäßer Computerprogrammcode, der wenn er von einer Recheneinheit eines 3D-Radarfüllstandmessgeräts ausgeführt wird, das 3D-Radarmessgerät dazu veranlasst folgende Schritte auszuführen:
- Erfassen dreidimensionaler Daten des Behälters mit dem Radarfüllstandmessgerät, durch systematisches Abscannen einer Innenhülle des Behälters mittels des Radarfüllstandmessgeräts,
- Ermitteln eines dreidimensionalen Modells des Behälters,
- Ermitteln der Linearisierungskurve zur Ermittlung eines Füllstandes aus einer gemessenen Füllhöhe aus dem dreidimensionalen Modell.

Ferner kann der Computerprogrammcode, wenn er von der Recheneinheit des 3D-Radarmessgeräts ausgeführt wird, zum Erfassen der dreidimensionalen Daten des Behälters durch ein Verändern der Hauptabstrahlrichtung des Radarmessgerätes veranlassen.

Der Computerprogrammcode gemäß der vorliegenden Anmeldung kann insbesondere so ausgestaltet sein, dass er, wenn er von einer Recheneinheit eines 3D-Radarmessgeräts ausgeführt wird, das 3D-Radarmessgerät dazu veranlasst das Verfahren gemäß einem der Patentansprüche 1 oder 2 auszuführen.

Der Computerprogrammcode kann ferner auf einem computerlesbaren Datenträger gespeichert sein. Die Anmeldung umfasst damit auch einen computerlesbaren Datenträger, auf dem ein Computerprogramm mit Computerprogrammcode gespeichert ist, das eine Recheneinheit eines 3D-Radarmessgeräts dazu veranlasst, das Verfahren gemäß der obigen Beschreibung auszuführen.

Die Radarmessgeräte gemäß der vorliegenden Anmeldung sind vorzugsweise als Radarfüllstandmessgeräte ausgebildet.

Die vorliegende Erfindung wird nachfolgend anhand von Ausführungsbeispielen unter Bezugnahme auf die beigefügten Figuren eingehend erläutert. Es zeigen:
- Figur 1: eine Prinzipskizze einer ersten Messanordnung mit einem Radarmessgerät, bei dem das Verfahren der vorliegenden Anmeldung zum Einsatz kommt,
- Figur 2: die Messanordnung aus Figur 1 mit zusätzlichen Ab- und Anlagerungen,
- Figur 3a): eine Prinzipskizze einer zweiten Messanordnung, bei der das Verfahren gemäß der vorliegenden Anmeldung zum Einsatz kommt,
- Figur 3b): die Messanordnung aus Figur 3a) in gekipptem Zustand,
- Figur 4: einen möglichen Verfahrensablauf des Verfahrens der vorliegenden Anmeldung und
- Figur 5: eine beispielhafte Linearisierungskurve.

In den Figuren bezeichnen - soweit nicht anders angegeben - gleiche Bezugszeichen gleiche Komponenten mit gleicher Funktion.

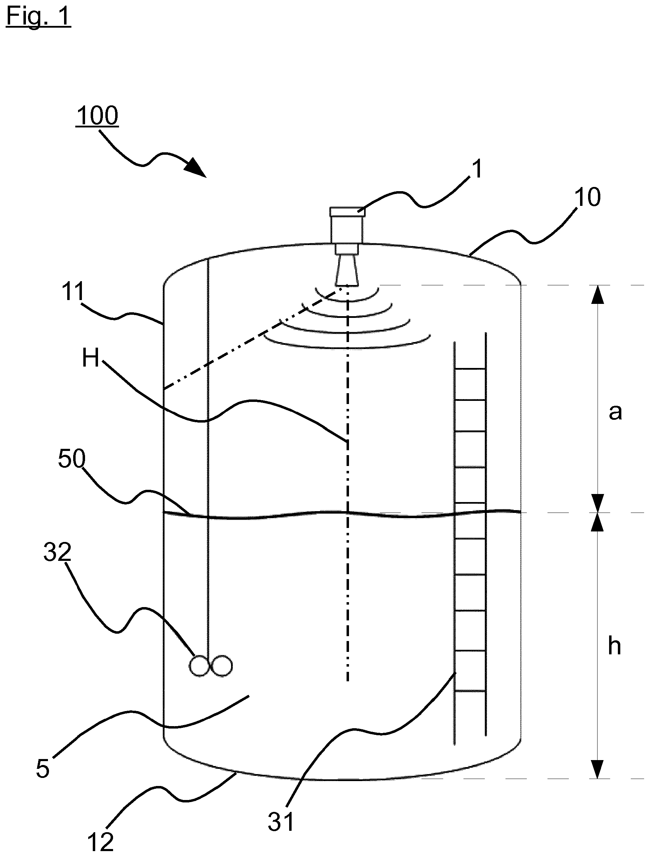

Figur 1 zeigt eine Prinzipskizze einer ersten Messanordnung 100 mit einem Radarmessgerät 1, bei dem das Verfahren der vorliegenden Anmeldung zum Einsatz kommt.

Das Radarmessgerät 1 ist im vorliegenden Ausführungsbeispiel als 3D-Radarfüllstandmessgerät ausgebildet und oberseitig an einem Behälter 10 angeordnet, sodass das Radarmessgerät 1 mit einer Hauptabstrahlrichtung H in Richtung eines Füllgutes 5 ausgerichtet ist. Durch das aussenden von Radarwellen in Richtung der Hauptabstrahlrichtung H kann so mittels des Radarmessgeräts 1 ein Abstand a zwischen dem Radarmessgerät 1 und einer Füllgutoberfläche 50 ermittelt werden. In Kenntnis einer Behältergeometrie, insbesondere eines Abstands von dem Radarmessgerät 1 zu einem Boden 12 des Behälters 10 kann auf diese Weise eine Füllhöhe h des Füllguts 5 in dem Behälter 10 ermittelt werden. Ausgehend von der Füllhöhe h kann in Kenntnis einer Linearisierungskurve L ein in dem Behälter 10 befindliches Füllgutvolumen V bestimmt werden.

In dem Behälter 10 sind in dem in Figur 1 dargestellten Ausführungsbeispiel verschiedene Einbauten 3 in Form einer Leiter 31 sowie eines Rührwerks 32 angeordnet. Diese Einbauten 3 sowie die konkrete Geometrie des Behälters 10 sind bei der Erstellung der Linearisierungskurve L zu berücksichtigen, da diese einen wesentlichen Einfluss auf das in dem Behälter 10 befindliche Füllgutvolumen V haben.

Zur Ermittlung eines Füllstands F, der das Füllgutvolumen V beispielsweise als Bruchteil eines maximalen Füllgutvolumens Fₘₐₓ angibt, wird die Füllhöhe h mittels einer Linearisierungskurve L in den Füllstand F umgerechnet. Die Linearisierungskurve L wird im vorliegenden Ausführungsbeispiel durch ein Erfassen dreidimensionaler Daten des Behälters 10 mit dem Radarmessgerät 1 durch systematisches Abtasten eines Innenraums des Behälters 10 mit dem Radarmessgerät 1 ermittelt. Aus den dreidimensionalen Daten des Behälters 10 wird ein dreidimensionales Modell des Behälters 10 ermittelt, aus dem dann die Linearisierungskurve L berechnet wird. Die Linearisierungskurve L gibt dann die mathematische Beziehung zwischen der Füllhöhe h und dem Füllstand F wieder.

Im vorliegenden Ausführungsbeispiel werden die dreidimensionalen Daten des Behälters 10 mit dem Radarmessgerät 1, das vorliegend als 3D-Radarmessgerät ausgebildet ist ermittelt. Zu diesem Zweck wird die Hauptabstrahlrichtung H des Radarmessgeräts 1 systematisch verändert, sodass mittels des Radarmessgeräts 1 eine Abtastung des Innenraums des Behälters 10 erfolgt. Auf diese Weise kann für jeden Punkt der Abstand einer Seitenwandung 11 sowie des Bodens 12 des Behälters 10 von dem Radarmessgerät 1 ermittelt werden, woraus dann das dreidimensionale Modell des Behälters 10 ermittelt werden kann. Die Ermittlung des dreidimensionalen Modells des Behälters 10 wird im vorliegenden Ausführungsbeispiel durch eine Datenbank mit dreidimensionalen Daten möglicher Einbauten unterstützt. Die verschiedenen Einbauten 3, die im vorliegenden Ausführungsbeispiel symbolisch als Leiter 31 und Rührwerk 32 dargestellt sind können anhand ihrer jeweils spezifischen Reflexionssignatur erkannt und so in der Berechnung des dreidimensionalen Modells berücksichtigt werden. Die Abmessungen der verschiedenen Einbauten 3 könnten auch direkt mit Hilfe des Radarmessgeräts 1 durch Abtasten ermittelt werden. Beispielsweise kann eine für das Radarmessgerät 1 sichtbare Außenkontur solcher Einbauten 3 beim Abtasten des Innenraums des Behälters 10 erfasst werden.

Bei dem in Figur 1 dargestellten Ausführungsbeispiel wird die Linearisierungskurve L erstmals bei einer Inbetriebnahme des Radarmessgeräts 1 und dann ereignisorientiert jeweils bei Erreichen eines minimalen Füllstandes F, d. h. vorliegend bei Erreichen eines maximalen Abstands a zwischen dem Radarmessgerät 1 und der Füllgutoberfläche 50 durchgeführt. Ein minimaler Füllstand F bzw. ein maximaler Abstand a wird hierfür bereits angenommen, wenn beispielsweise 90 % des Abstands zwischen dem Radarmessgerät 1 und dem Boden 12 erreicht werden. Auf diese Weise wird sichergestellt, dass ein Update der Linearisierungskurve L auch dann stattfindet, wenn der Behälter 10 im laufenden Betrieb niemals komplett entleert wird. Diese Situation kann beispielsweise aufgrund von Ablagerungen am Boden 12 des Behälters 10 oder aus wirtschaftlichen Gründen, aus denen der Behälter 10 nie vollständig entleert wird, der Fall sein.

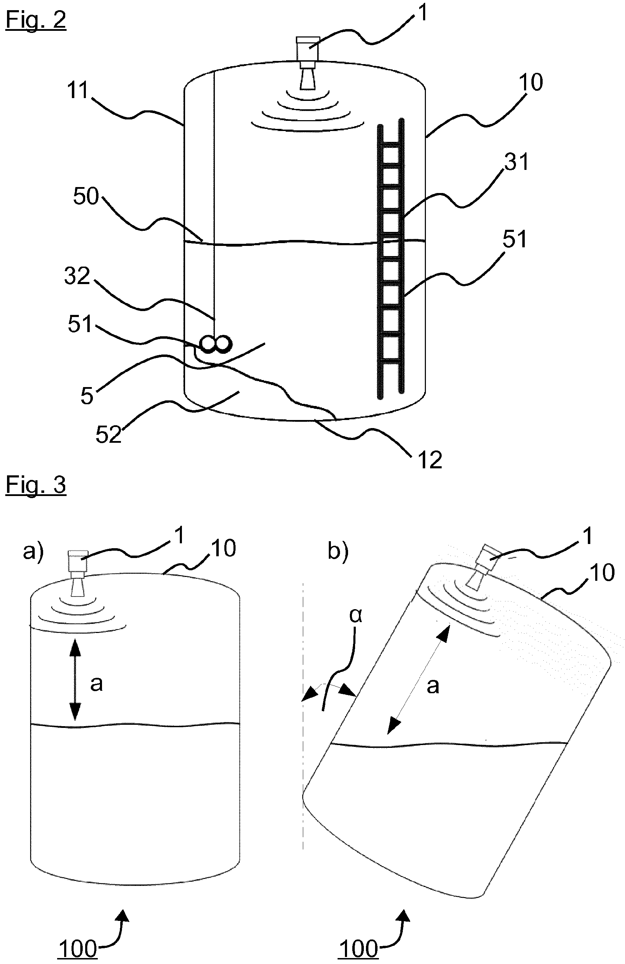

In Figur 2 ist die Messanordnung 100 aus Figur 1 nochmals dargestellt, wobei in den Figur 2 gezeigten Abbildung die Einbauten 3 in Form der Leiter 31 und des Rührwerks 32 mit Anlagerungen 51 behaftet sind. Am Boden 12 des Behälters 10 sind ferner Ablagerungen 52 eingezeichnet, die beispielsweise durch Sedimentierung aus dem Füllgut 5 auftreten können. Dadurch, dass das Verfahren zur Ermittlung der Linearisierungskurve L bei Erreichen eines minimalen Füllstands F immer wieder durchlaufen wird, können diese Anlagerungen 51 sowie die Ablagerungen 52 erkannt werden. Dies erfolgt durch einen Vergleich des dreidimensionalen Modells des Behälters 10 zum Zeitpunkt der Inbetriebnahme des Radarmessgeräts 1 mit einem aktuell ermittelten dreidimensionalen Modell. Je nach Anwendungsfall können bei der Detektion von Anlagerungen 51 oder Ablagerungen 52 Warnmeldungen und/oder Fehlermeldungen ausgegeben werden, sodass das Betriebspersonal beispielsweise eine Reinigung des Behälters 10 initiieren kann.

In den Figuren 3a) und 3b) ist eine Prinzipskizze einer zweiten Messanordnung 100, bei der das Verfahren gemäß der vorliegenden Anmeldung zum Einsatz kommt gezeigt, wobei der Behälter 10 in Figur 3b) im Verhältnis zu dem Behälter 10 in Figur 3a) um einen Winkel a verkippt dargestellt ist. Durch einen in dem Radarmessgerät 1 integrierten Beschleunigungssensor kann eine solche Schrägstellung der Messanordnung 100 festgestellt und kompensiert werden, sodass trotz eines geänderten Abstands a zwischen dem Radarmessgerät 1 und der Füllgutoberfläche 50 ein korrekter Füllstand F ausgegeben wird. Anstelle eines Beschleunigungssensor kann das Verkippens des Behälters 10 auch durch ein zyklisches Durchlaufen des Verfahrens zur Ermittlung der Linearisierungskurve L ermittelt werden. Wird dieses Verfahren nämlich in der in Figur 3b) dargestellten Situation durchlaufen, so wird die im Vergleich zu Figur 3a) anders verlaufende Füllgutoberfläche 50 detektiert werden, sodass aufgrund dieser auf das Verkippens des Behälters 10 geschlossen werden kann.

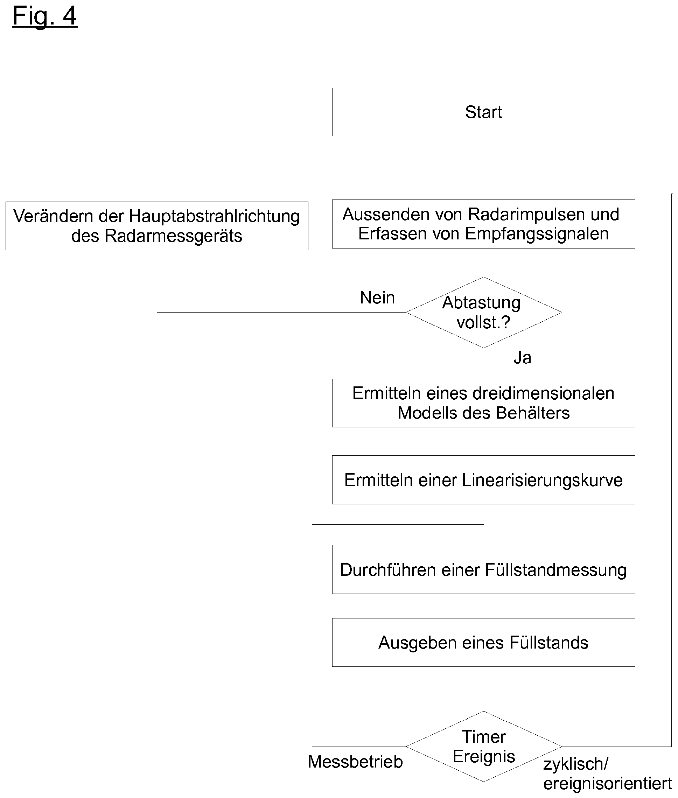

In Figur 4 ist eine möglicher Verfahrensablauf des Verfahrens der vorliegenden Anmeldung dargestellt.

In einem ersten Schritt wird das Verfahren gestartet und es werden Radarimpulse von dem Radarmessgerät 1 ausgesendet und entsprechende Empfangssignale erfasst. Anschließend wird überprüft ob eine Abtastung des Innenraums des Behälters 10 vollständig ist und für den Fall, dass die Abtastung noch nicht vollständig ist die Hauptabstrahlrichtung H des Radarmessgeräts 1 verändert und erneut zu dem gerade absolvierten Schritt des Aussenden von Radarimpulsen und Erfassen von Empfangssignal - nun mit der entsprechend veränderten Hauptabstrahlrichtung H - gewechselt. Diese Schleife wird solange wiederholt, bis eine vollständige Abtastung des Innenraums des Behälters 10 vorliegt.

Wann eine Abtastung als vollständig anzusehen ist kann jeweils anwendungsspezifischen definiert werden, beispielsweise kann dies durch das Vorgeben einer bestimmten Rasterung beim Verändern der Hauptabstrahlrichtung H des Radarmessgeräts 1 erreicht werden.

Wenn eine vollständige Abtastung des Innenraums des Behälters 10 vorliegt, wird aus dieser ein dreidimensionales Modell des Behälters ermittelt. Die Ermittlung des dreidimensionalen Modells des Behälters 10 erfolgt mit Unterstützung einer Datenbank mit dreidimensionalen Daten möglicher Einbauten 3, sodass ein möglichst vollständiges und korrektes dreidimensionales Modell des Behälters 10 errechnet wird.

Aus dem dreidimensionalen Modell des Behälters 10 wird in einem weiteren Schritt die Linearisierungskurve L zur Ermittlung des Füllstands F auf Basis einer Füllhöhe h, die aus dem Abstands a zwischen dem Radarmessgerät 1 und der Füllgutoberfläche 50 ermittelt wird, berechnet.

Anschließend wird eine reguläre Füllstandmessung mit regulärer Hauptabstrahlrichtung H - in der Regel ist diese senkrecht zur Füllgutoberfläche 50 ausgerichtet - durchgeführt und ein mittels der Linearisierungskurve L ermittelten Füllstand F ausgegeben. Anschließend wird entweder im regulären Messbetrieb eine weitere Füllstandmessung durchgeführt und der entsprechend ermittelten Füllstand F ausgegeben oder durch einen Timer oder ein entsprechendes Ereignis getriggert, d. h. zyklisch oder ereignisorientiert das Verfahren zur Ermittlung der Linearisierungskurve erneut gestartet.

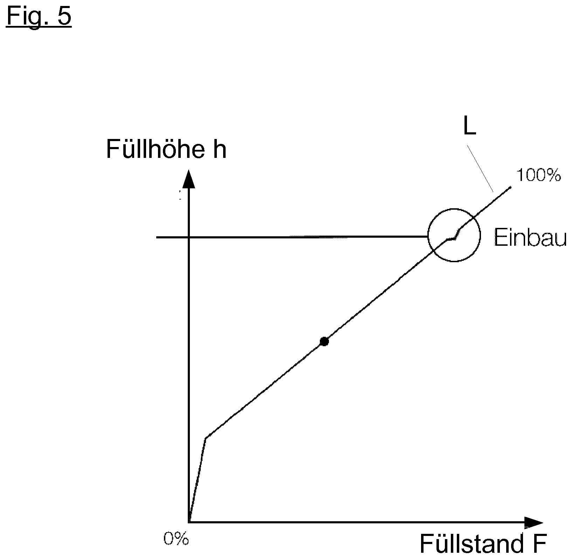

In Figur 5 ist beispielhaft eine Linearisierungskurve L dargestellt. Die Linearisierungskurve L zeigt dabei den funktionalen Zusammenhang, wie aus der Füllhöhe h der Füllstand F ermittelt werden kann. Der Füllstand F ist in dem vorliegenden Ausführungsbeispiel in einem Bereich von 0-100 % angegeben, wobei abhängig von der Form des Behälters 10 sowie der Anzahl und Form der in dem Behälter 10 angeordneten Einbauten 3 auch andere Verläufe der Linearisierungskurve L auftreten können.

### Bezugszeichenliste

- 1: Radarmessgerät
- 3: Einbauten
- 5: Füllgut
- 10: Behälter
- 11: Seitenwände
- 12: Boden

- 31: Leiter
- 32: Rührwerk

- 50: Füllgutoberfläche
- 51: Füllgutablagerungen
- 52: Füllgutanlagerungen

- 100: Messanordnung

- a: Abstand
- h: Füllhöhe
- F: Füllstand
- H: Hauptabstrahlrichtung
- L: Linearisierungskurve
- V: Füllgutvolumen

## Patentansprüche

1. Verfahren zur Ermittlung einer Linearisierungskurve (L) zur Ermittlung des Füllstandes (F) in einem Behälter (10) aus einer Füllhöhe (h) mit einem Radarmessgerät (1), wobei das Radarmessgerät als Radarfüllstandmessgerät ausgebildet ist,
**gekennzeichnet durch** folgende Schritte:
- Erfassen dreidimensionaler Daten des Behälters (10) mit dem Radarmessgerät (1), durch systematisches Abtasten eines Innenraums des Behälters (10) mittels des Radarmessgeräts (1), durch ein Verändern einer Hauptabstrahlrichtung (H) des Radarmessgerätes (1), wobei das Verändern durch eine entsprechende Ansteuerung einer Antenne eines Radarmessgeräts (1) erfolgt,
- Ermitteln eines dreidimensionalen Modells des Behälters (10), wobei die dreidimensionale Erfassung des Behälters (10) durch eine Datenbank mit dreidimensionalen Daten möglicher Einbauten (3) unterstützt wird,
- Erfassen einer Lage des Behälters (10),
- Ermitteln der Linearisierungskurve (L) aus dem dreidimensionalen Modell und der Lage,
wobei Auswirkungen auf den Füllstand durch mehr oder weniger eingetauchte Einbauten aufgrund der geänderten Lage des Behälters (10) berücksichtigt werden.

2. Verfahren gemäß einem der vorhergehenden Ansprüche,
**dadurch gekennzeichnet, dass**
das Verfahren zyklisch oder ereignisorientiert durchlaufen wird und ein Vergleich mit einem Ergebnis aus einem vorhergehenden Verfahren erfolgt.

3. Verwendung eines 3D-Radarmessgeräts zur Durchführung eines Verfahrens gemäß einem der Patentansprüche 1 bis 2.

4. Radarfüllstandmessgerät (1) zur Bestimmung eines Füllstandes (F) in einem Behälter (10),
wobei das Radarmessgerät (1) als 3D-Radarfüllstandmessgerät ausgebildet ist und eingerichtet ist zur Ermittlung einer Linearisierungskurve (L), wobei das 3D-Radarmessgerät Mittel zur Erfassen dreidimensionaler Daten des Behälters (10), durch systematisches Abscannen eines Innenraums des Behälters (10) durch ein Verändern einer Hauptabstrahlrichtung (H) des Radarmessgerätes (1), aufweist wobei das Verändern durch eine entsprechende Ansteuerung einer Antenne eines Radarmessgeräts (1) erfolgt, und in einer Recheneinheit Algorithmen zur Ermittlung eines dreidimensionalen Modells des Behälters (10) abgelegt sind
und in der Recheneinheit ferner ein Zugriff auf eine Datenbank mit dreidimensionalen Daten möglicher Einbauten (3) hinterlegt ist, wobei
das Radarfüllstandmessgerät (1) einen Beschleunigungssensor zur Erfassung der Lage des Behälters (10) aufweist und das Radarfüllstandmessgerät (1) dazu eingerichtet ist, bei beweglichen Behältern eine Änderung einer Ausrichtung des Behälters zu erkennen und direkt in die Berechnung des Füllstandes (F) bzw. eines Füllgutvolumens (V) einfließen zu lassen und Änderungen des Verhältnisses zwischen Füllhöhe und Füllstand bzw. Füllgutvolumen zu berücksichtigen
und das Radarfüllstandmessgerät (1) dazu eingerichtet ist, Auswirkungen auf den Füllstand (F) bzw. das Füllgutvolumen (V) durch mehr oder weniger eingetauchte Einbauten (3) aufgrund der geänderten Lage des Behälters (10) zu berücksichtigen.

5. Computerprogrammcode, der wenn er von einer Recheneinheit eines 3D-Radarfüllstandmessgeräts (1) ausgeführt wird, das Radarmessgerät (1) dazu veranlasst folgende Schritte auszuführen:
- Erfassen dreidimensionaler Daten des Behälters (10) mit dem Radarmessgerät (1), durch systematisches Abscannen eines Innenraums des Behälters (10) mittels des Radarmessgeräts (1) sowie von Einbauten (3), wobei das Erfassen der dreidimensionalen Daten des Behälters (10) ein Verändern der Hauptabstrahlrichtung (H) des Radarmessgerätes (1) durch eine entsprechende Ansteuerung einer Antenne eines Radarmessgeräts (1) umfasst,
- Ermitteln eines dreidimensionalen Modells des Behälters (10) inklusive aller Einbauten, mit Unterstützung einer Datenbank mit dreidimensionalen Daten möglicher Einbauten,
- Erfassen einer Lage des Behälters (10)
- Ermitteln der Linearisierungskurve (L) zur Ermittlung eines Füllstandes (F) aus einer gemessenen Füllhöhe aus dem dreidimensionalen Modell und der Lage, wobei
Auswirkungen auf den Füllstand durch mehr oder weniger eingetauchte Einbauten aufgrund der geänderten Lage des Behälters (10) berücksichtigt werden.

## Claims

1. A method for determining a linearization curve (L) for determining the filling level (F) in a container (10) from a filling height (h) with a radar measuring device (1), wherein the radar measuring device is configured as a radar level measuring device,
**characterized by** the following steps:
- acquiring three-dimensional data of the container (10) with the radar measuring device (1) by systematically scanning an interior space of the container (10) by means of the radar measuring device (1) by varying a main emission direction (H) of the radar measuring device (1), wherein the varying takes place by correspondingly controlling an antenna of a radar measuring device (1),
- determining a three-dimensional model of the container (10), wherein the three-dimensional acquisition of the container (10) is supported by a database with three-dimensional data of possible installations (3),
- acquiring a position of the container (10),
- determining the linearization curve (L) from the three-dimensional model and the position,
wherein effects on the filling level caused by more or less immersed installations due to the changed position of the container (10) are taken into account.

2. The method according to any one of the preceding claims,
**characterized in that**
the method is carried out in a cyclic or event-oriented manner, and a comparison with a result from a preceding method is made.

3. Use of a 3D radar measuring device for carrying out the method according to any one of the patent claims 1 to 2.

4. A radar level measuring device (1) for determining a filling level (F) in a container (10),
wherein the radar measuring device (1) is configured as a 3D radar level measuring device and is configured for determining a linearization curve (L), wherein the 3D radar measuring device has means for acquiring three-dimensional data of the container (10) by systematically scanning an interior space of the container (10) by varying a main emission direction (H) of the radar measuring device (1), wherein the varying takes place by correspondingly controlling an antenna of the radar measuring device (1), and algorithms for determining a three-dimensional model of the container (10) are stored in a computing unit, and further, an access to a database with three-dimensional data of possible installations (3) is stored in the computing unit, wherein the radar level measuring device (1) has an acceleration sensor for acquiring the position of the container (10), and the radar level measuring device (1) is configured for recognizing, in the case of movable containers, a change in an orientation of the container and directly including it in the calculation of the filling level (F) or a filling material volume (V) and taking into account changes in the ratio between the filling height and filling level or the filling material volume, and the radar level measuring device (1) is configured for taking into account effects on the filling level (F) or the filling material volume (V) caused by more or less immersed installations (3) due to the changed position of the container (10).

5. A computer program code which, when it is executed by a computing unit of a 3D radar level measuring device (1), causes the radar measuring device (1) to execute the following steps:
- acquiring three-dimensional data of the container (10) with the radar measuring device (1) by systematically scanning an interior space of the container (10) and of installations (3) by means of the radar measuring device (1), wherein the acquisition of the three-dimensional data of the container (10) includes a varying of the main emission direction (H) of the radar measuring device (1) by correspondingly controlling an antenna of the radar measuring device (1),
- determining a three-dimensional model of the container (10) including all of the installations, with support from a database with three-dimensional data of possible installations,
- acquiring a position of the container (10),
- determining the linearization curve (L) for determining a filling level (F) from a measured filling height from the three-dimensional model and the position, wherein
effects on the filling level caused by more or less immersed installations due to the changed position of the container (10) are taken into account.

## Revendications

1. Procédé de détermination d'une courbe de linéarisation (L) pour déterminer le niveau de remplissage (F) dans un conteneur (10), à partir d'une hauteur de remplissage (h) à l'aide d'un dispositif de mesure par radar (1), dans lequel ledit dispositif de mesure par radar est conçu en tant que dispositif de mesure de niveau de remplissage par radar,
**caractérisé par** les étapes suivantes consistant à:
- acquérir des données tridimensionnelles du conteneur (10) à l'aide du dispositif de mesure par radar (1), en balayant systématiquement un intérieur du conteneur (10) à l'aide du dispositif de mesure par radar (1), en changeant une direction d'émission principale (H) du dispositif de mesure par radar (1), dans lequel le changement se fait par une commande correspondante d'une antenne d'un dispositif de mesure par radar (1),
- déterminer un modèle tridimensionnel du conteneur (10), dans lequel
la détection tridimensionnelle du conteneur (10) est supportée par une base de données contenant des données tridimensionnelles d'éventuels composants installés (3),
- détecter une position du conteneur (10),
- déterminer la courbe de linéarisation (L) à partir du modèle tridimensionnel et de la position,
dans lequel des effets sur le niveau de remplissage dus à des composants installés plus ou moins immergés du fait de la position modifiée du conteneur (10) sont pris en compte.

2. Procédé selon la revendication précédente, **caractérisé par le fait que** le procédé est passé de manière cyclique ou événementielle et qu'une comparaison avec un résultat d'un procédé précédent est faite.

3. Utilisation d'un dispositif de mesure par radar 3D pour la mise en oeuvre d'un procédé selon l'une quelconque des revendications 1 à 2.

4. Dispositif de mesure de niveau de remplissage par radar (1) destiné à déterminer un niveau de remplissage (F) dans un conteneur (10),
dans lequel le dispositif de mesure par radar (1) est conçu en tant que dispositif de mesure de niveau de remplissage par radar 3D et est configuré pour déterminer une courbe de linéarisation (L), dans lequel le dispositif de mesure par radar 3D comprend des moyens pour acquérir des données tridimensionnelles du conteneur (10) en balayant systématiquement un intérieur du conteneur (10), en changeant une direction d'émission principale (H) du dispositif de mesure par radar (1), dans lequel le changement se fait par une commande correspondante d'une antenne d'un dispositif de mesure par radar (1), et des algorithmes pour déterminer un modèle tridimensionnel du conteneur (10) sont stockés dans une unité de calcul,
et dans ladite unité de calcul est stocké en outre un accès à une base de données contenant des données tridimensionnelles d'éventuels composants installés (3), dans lequel
le dispositif de mesure de niveau de remplissage par radar (1) comprend un capteur d'accélération pour détecter la position du conteneur (10) et le dispositif de mesure de niveau de remplissage par radar (1) est configuré pour détecter un changement d'une orientation du conteneur en cas de conteneurs mobiles et pour inclure celui-ci directement dans le calcul du niveau de remplissage (F) ou bien d'un volume de matériau de remplissage (V) et pour prendre en compte des modifications du rapport entre la hauteur de remplissage et le niveau de remplissage ou bien le volume de matériau de remplissage,
et le dispositif de mesure de niveau de remplissage par radar (1) est configuré pour prendre en compte des effets sur le niveau de remplissage (F) ou bien le volume de matériau de remplissage (V), dus à des composants installés (3) plus ou moins immergés du fait de la position modifiée du conteneur (10).

5. Code de programme d'ordinateur qui, lorsqu'il est exécuté par une unité de calcul d'un dispositif de mesure de niveau de remplissage par radar 3D (1), amène le dispositif de mesure par radar (1) à mettre en oeuvre les étapes suivantes consistant à:
- acquérir des données tridimensionnelles du conteneur (10) à l'aide du dispositif de mesure par radar (1), en balayant systématiquement un intérieur du conteneur (10) à l'aide du dispositif de mesure par radar (1) ainsi que des composants installés (3), dans lequel l'acquisition des données tridimensionnelles du conteneur (10) comprend un changement de la direction d'émission principale (H) du dispositif de mesure par radar (1) par une commande correspondante d'une antenne d'un dispositif de mesure par radar (1),
- déterminer un modèle tridimensionnel du conteneur (10) y compris tous les composants installés, à l'aide d'une base de données contenant des données tridimensionnelles d'éventuels composants installés,
- détecter une position du conteneur (10),
- déterminer la courbe de linéarisation (L) pour déterminer un niveau de remplissage (F) à partir d'une hauteur de remplissage mesurée, à partir du modèle tridimensionnel et de la position,
dans lequel des effets sur le niveau de remplissage dus à des composants installés plus ou moins immergés du fait de la position modifiée du conteneur (10) sont pris en compte.
